# EUROPÄISCHE PATENTANMELDUNG

(11) **EP 2 607 208 A2**
(43) Veröffentlichungstag der Anmeldung: **26.06.2013**
(21) Anmeldenummer: 12008179.9
(22) Anmeldetag: 07.12.2012
(51) Int. Cl.: B62D 7/15

(54) **Vorrichtung zum Stabilisieren eines Lenkgetriebes**

(30) Priorität: 21.12.2011 DE 102011121874
(71) Anmelder: AUDI AG, 85045 Ingolstadt (DE)
(72) Erfinder: Michel, Wilfried, 93339 Riedenburg (DE)

(57) **Zusammenfassung**

Die Erfindung betrifft eine Vorrichtung zum Stabilisieren eines Lenkgetriebes für ein Kraftfahrzeug, welches Lenkgetriebe, ein nicht selbsthemmendes Stellgetriebe (16) mit einer auf zumindest eine Spurstange (18) wirkender, axial verschiebbarer Spindel (14) aufweist, die mittels einer Spindelmutter (20) verstellbar ist, wobei die Spindelmutter (20) über einen Elektromotor (38) angetrieben ist, dessen Abtriebswelle (58) mittel- oder unmittelbar auf die Spindelmutter (20) wirkt. Erfindungsgemäß ist in dem Antriebsweg zwischen dem Elektromotor (38) und der Spindelmutter (20) ein Sperrelement, insbesondere Schlingfederbremse (52), geschaltet, das in einer Freigabestellung (I) den Antriebsweg für eine Übertragung eines Antriebsmoments (M_{A}) vom Elektromotor (38) auf die Spindelmutter (20) freischaltet, und in einer Sperrstellung (II) ein Bremsmoment erzeugt, das einem von der Spindelmutter (20) auf den Elektromotor (38) gerichteten Reaktionsmoment (M_{R}) entgegenwirkt.

## Beschreibung

Die vorliegende Erfindung betrifft eine Vorrichtung zum Stabilisieren eines Lenkgetriebes für Kraftfahrzeuge gemäß dem Oberbegriff des Patentanspruchs 1.

Sind elektrisch angetriebene Lenksysteme (zum Beispiel steer by wire Systeme oder Lenkungssteller für Hinterradlenkungen) mit nicht selbsthemmenden Stellgetrieben versehen, so sind Maßnahmen wie zum Beispiel elektromagnetische Bremsen im Elektromotor vorzusehen, um durch Rücktrieb bewirkte Eigenlenkbewegungen auszuschließen.

Aus dem Stand der Technik sind als Einzelsteller oder Zentralsteller ausgeführte Lenkungssteller sowie Vorderachslenkgetriebe bekannt, die elektrisch angetrieben werden. Wegen des günstigen Wirkungsgrades setzt sich immer mehr der Kugelgewindetrieb durch. Andererseits besitzt der Kugelgewindetrieb jedoch keine Selbsthemmung. Dies bedeutet, dass stets Halteenergie aufgewendet werden muss, sobald Störkräfte von außen auf den Kugelgewindetrieb einwirken. In der Regel kommen hierzu Magnetbremsen in Betracht, welche fast ausschließlich auf der Niedrigmomentenseite, also am Elektromotor, das heißt noch vor der Getriebestufe, angeordnet werden. Im stromlosen Zustand sind diese Bremsen geschlossen. Während des Betriebes müssen solche Magnetbremsen mittels Strombeaufschlagung geöffnet, das heißt gehalten werden.

Bei den Lenkungsstellern, respektive Elektrolenkungen, ist die Kugelgewindemutter stets konzentrisch zur Spindel angeordnet. Manchmal wird die Spindel, meist jedoch wird die Kugelgewindemutter durch einen Elektromotor angetrieben. Der Elektromotor ist entweder ebenfalls konzentrisch um die Kugelgewindemutter angeordnet, häufig wird die Kugelgewindemutter über Zahnräder oder einen Zahnriemen angetrieben. Der Elektromotor sitzt achsparallel neben dem Kugelgewindetrieb. Gleichgültig, wie die Kugelgewindemutter auch angetrieben wird, stellt sich das Problem des "Haltens der Kugelgewindemutter", sobald Störkräfte von außen auf den Kugelgewindetrieb einwirken. Der Kugelgewindetrieb möchte wegen der fehlenden Selbsthemmung einfach loslaufen. Bei den eben erwähnten Magnetbremsen ist während des Verstellvorganges, das heißt während des Lenkens, Halteenergie notwendig, da die Bremse offen gehalten werden muss. Dies ist ersichtlich von großem Nachteil. Da es sich fast ausschließlich um Reibungsbremsen handelt, muss mittels relativ großer Federkraft im stromlosen Zustand "gebremst" werden. Das bedeutet im Umkehrschluss, dass wiederum sehr große Kräfte zum Öffnen der Bremse im Betrieb aufgewendet werden müssen, was demgemäß großen Stromstärken, das heißt Energiemengen, entspricht.

Es wäre also eine Bremse wünschenswert, die "von sich aus mitdenkt", keine Halteenergie benötigt und in beide Drehrichtungen ihre Bremswirkung entfaltet.

Die Aufgabe der Erfindung besteht darin, eine Vorrichtung bereitzustellen, die mit baulich besonders einfachen Mitteln durch Rücktrieb bewirkte Eigenlenkbewegungen ausschließt und die unabhängig von jeglicher Energieversorgung arbeitet.

Die Aufgabe ist durch die Merkmale des Patentanspruches 1 gelöst. Vorteilhafte Weiterbildungen der Erfindung sind in den Unteransprüchen offenbart.

Die Erfindung beruht auf dem Sachverhalt, dass im oben angegebenen Stand der Technik ein relativ hoher Energiebedarf für das Offenhalten der Reibungsbremse während des Betriebes erforderlich ist. Zudem ist im oben genannten Stand der Technik eine Steuerungslogik für das Öffnen und Schließen erforderlich. Außerdem ist bei Verwendung von Reibungsbremsen ein Verschleiß unvermeidlich.

Um diese eklatanten Nachteile zu vermeiden, wird sinngemäß im Patentanspruch 1 vorgeschlagen, zwischen dem Elektromotor und dem Antriebsritzel eine doppelt wirkende Schlingfederbremse anzuordnen. Eine solche Schlingfederbremse arbeitet "selbstdenkend" in beide Drehrichtungen, und zwar ohne Zuführung von Fremdenergie sowie ohne jegliche Steuerungslogik. Mithilfe der Schlingfederbremse kann jedes äußere Reaktionsmoment, gleichgültig in welcher Richtung es den Elektromotor drehen möchte, gebremst werden. Dies erfolgt dadurch, dass sich eine Schlingfeder an eine Zylinderwand anlegt und somit eine Drehung verhindert. Die Schlingfederbremse selbst kann je nach Bauart, respektive Platzverhältnisse, so ausgeführt sein, dass sich die Schlingfeder zum Bremsen entweder an eine Zylinderinnenwand anlegt oder die Schlingfeder einen Zylinderaußenmantel einschnürt. Beide Wirkprinzipien sind identisch. Um mit Hilfe der Schlingfeder zu bremsen, ist ein sogenannter Schließer vorgesehen. Der Schließer ist in dem Fall mit dem Antriebsritzel verbunden, das heißt alle Drehungen, die als Störung vom Antriebsritzel her rühren werden auf den Schließer übertragen. Dieser betätigt den entsprechenden Schenkel der Schlingfeder. Der Mechanismus sperrt sogleich, weil sich nämlich die Schlingfeder radial an eine Zylinderwand - selbstsperrend und mit Verstärkungsfaktor - anlegt.

Soll andererseits eine durch die Steuerung gewollte Drehbewegung des Elektromotors übertragen werden, wird durch den sogenannten Öffner, der mit der Elektromotorwelle verbunden ist, die Schlingfeder wieder gelöst. Auch die Funktion des Öffners ist in den beiden Drehrichtungen wirksam. Nachfolgend sind die Vorteile der Erfindung nochmals zusammengefasst: Die Schlingfederbremse "denkt" praktisch selbstständig mechanisch mit. Es ist keine Steuerungslogik für das Ansteuern der Schlingfederbremse erforderlich. Zudem sind keine elektrische Betätigungselemente, etwa ein Hubmagnet, für die Bremsbetätigung erforderlich. Die Schlingfederbremse wirkt zudem in beide Drehrichtungen. Um die Aktuatorik während des Betriebes zu halten, ist außerdem keine elektrische Energie erforderlich. Sämtliche Aktionen, die von der Steuerung beziehungsweise vom Elektromotor ausgehen, haben Priorität. Demgegenüber werden alle Störungen, die von außen auf den Aktuator einwirken, abgeblockt. Die Schlingfederbremse besteht außerdem aus wenigen, einfachen Bauteilen und weist im Verhältnis zur erzielbaren Haltekraft ein sehr geringes Gewicht auf. Zudem ergibt sich ein Selbstverstärkungseffekt durch die Auflaufwirkung der Schlingfeder (das heißt, bei einem Ansteigen des zu bremsenden Drehmomentes steigt auch das Bremsmoment selbsttätig an). Es erfolgt außerdem kein "Festbeißen" der Bremse durch Stifte, Klinken, Rasten oder ähnlichem. Schließlich arbeitet die Schlingfederbremse nahezu verschleißfrei, da es sich hier um keine Reibungsbremse im herkömmlichen Sinn handelt.

Nachfolgend sind die Merkmale der Erfindung nochmals im Einzelnen aufgeführt:

So kann die Abtriebswelle des Elektromotors zweiteilig ausgeführt sein und zwischen deren Wellenabschnitten die mit dem umgebenden Gehäuse zusammenwirkende Schlingfederbremse vorgesehen sein. Die mehrere Wicklungen aufweisende Schlingfeder bildet ein einfaches, zuverlässig wirkendes Bauteil, das bei einem Abtriebsmoment des Elektromotors im Gehäuse frei drehbar ist und bei einem Rücktriebsmoment je nach Bauweise sich einschnürt oder aufweitet und damit im Gehäuse festgebremst ist. Es ist keinerlei Energiezuführung erforderlich.

Dabei kann die Schlingfeder an ihren Enden jeweils einen radial abragenden Arm aufweisen, an welchen Armen mit geringem Umfangsspiel ein Mitnehmer auf dem einen Wellenabschnitt und in Gegenrichtung die Flanken eines die Arme umfassenden Mitnehmers auf dem anderen Wellenabschnitt angreifen. Die Angriffsflächen der beiden Mitnehmer greifen gegensinnig an der Schlingfeder bzw. an deren Armen an und bilden zugleich in Umfangsrichtung einen Formschluss, der selbst bei einem Versagen der Schlingfeder eine Lenkbetätigung sicherstellt.

Fertigungstechnisch günstig kann die Schlingfeder innerhalb einer gehäusefesten Hülse angeordnet sein und deren Arme radial nach innen abragen, wobei der eine, radial nach außen sich erstreckende Mitnehmer des einen Wellenabschnitts zwischen die Arme eingreift und der andere, Ausnehmungen in einer Umfangswand aufweisende Mitnehmer des anderen Wellenabschnitts die Arme der Schlingfeder umgreift.

Des Weiteren kann die Schlingfederbremse zwischen einem tassenförmigen Gehäuseteil des Elektromotors und einem ringförmigen, an den Elektromotor anschließendem Adapterteil angeordnet sein und somit eine mit dem Elektromotor einfach zu verbindende Vormontageinheit darstellen.

Neben der Möglichkeit einer koaxialen Anordnung kann in einer bevorzugten Ausgestaltung der Erfindung der Elektromotor achsparallel zur Spindel des Stellgetriebes angeordnet sein und auf seiner zweiteiligen Abtriebswelle ein Zahnritzel tragen, das Teil eines auf die Spindelmutter wirkenden Zahntriebes ist. Der Zahntrieb kann ein Stirnzahnradtrieb oder ein Zahnriementrieb sein.

Insbesondere kann ferner das Stellgetriebe durch einen an sich bekannten Kugelgewindetrieb gebildet sein, dessen Kugelgewindemutter im Lenkgehäuse drehbar, jedoch axial unverschiebbar geführt und über den Zahntrieb angetrieben ist und dessen Gewindespindel unverdrehbar, jedoch axial verschiebbar im Lenkgehäuse gelagert und mit zumindest einer Spurstange der Lenkung trieblich verbunden ist. Derartige Kugelgewindetriebe ermöglichen eine besonders leichtgängige und präzise Lenkbetätigung.

Schließlich kann das Lenkgetriebe ein einseitig oder zentral wirkender Lenkungssteller für die gelenkten Hinterräder von Kraftfahrzeugen sein.

Ein Ausführungsbeispiel der Erfindung ist im Folgenden anhand der beigefügten, schematischen Zeichnung näher erläutert. Es zeigen:
- Fig. 1: in einem teilweisen Längsschnitt einen Lenkungssteller für ein gelenktes Hinterrad eines Kraftfahrzeuges, mit einem antreibenden Elektromotor und einen Kugelgewindetrieb als Stellvorrichtung, sowie mit einer in die Abtriebswelle des Elektromotors integrierten Schlingfederbremse;
- Fig. 2: ebenfalls in einem Längsschnitt die zweigeteilte Abtriebswelle mit Schlingfeder und Mitnehmern als in einem Gehäuse angeordnete Vormontageeinheit;
- Fig. 3: die Anordnung nach Fig. 2 mit Explosionsdarstellung der Einzelteile;
- Fig. 4: eine Draufsicht auf die Schlingfederbremse mit Schlingfeder und Mitnehmern in der festgebremsten Position zur Abstützung von Rücktriebsmomenten; und
- Fig. 5: die Draufsicht gemäß Fig. 4 in der Abtriebsposition mit frei drehbarer Abtriebswelle des Elektromotors.

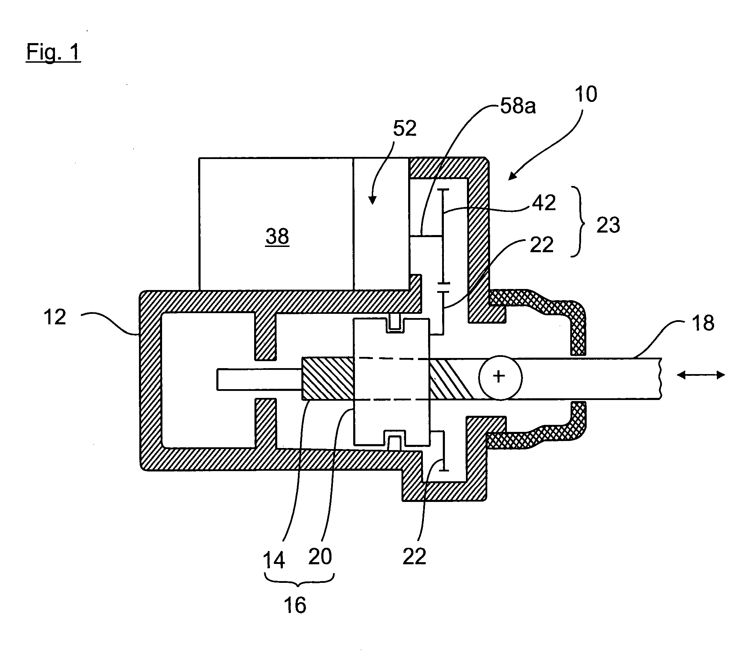

Die Fig. 1 zeigt grob schematisch einen Lenkungssteller 10 als Lenkgetriebe für gelenkte Hinterräder von Kraftfahrzeugen, zum Beispiel mit Allradlenkung.

Der Lenkungssteller 10 weist ein Lenkgehäuse 12 auf, in dem eine Gewindespindel 14 eines Kugelgewindetriebs 16 als Stellgetriebe unverdrehbar, jedoch axial verschiebbar gelagert ist. Die Gewindespindel 14 ist gelenkig mit einer nach außen geführten Spurstange 18 verbunden.

Das Lenkgehäuse 12 ist in nicht dargestellter Weise mit dem Aufbau oder einem Hilfsrahmen des Kraftfahrzeugs fest verbunden, während die Spurstange 18 an einem Radführungsteil der Radaufhängung des Kraftfahrzeugs angelenkt ist.

Die Kugelgewindemutter 20 des Kugelgewindetriebs 16 ist über Kugeln (nicht dargestellt) auf der Gewindespindel 14 drehbar gelagert und zudem axial unverschiebbar im Lenkgehäuse 12 geführt. Eine Verdrehung der Kugelgewindemutter 20 bewirkt somit ein axiales Verschieben der Gewindespindel 14 bzw. eine Lenkbewegung.

Die Kugelgewindemutter 20 trägt ein Stirnzahnrad 22, das mit einem Antriebsritzel 42 einen Zahnradtrieb 23 bildet, mittels dem die Kugelgewindemutter 20 von dem achsparallel angeordneten, am Lenkgehäuse 12 befestigten Elektromotor 38 angetrieben ist.

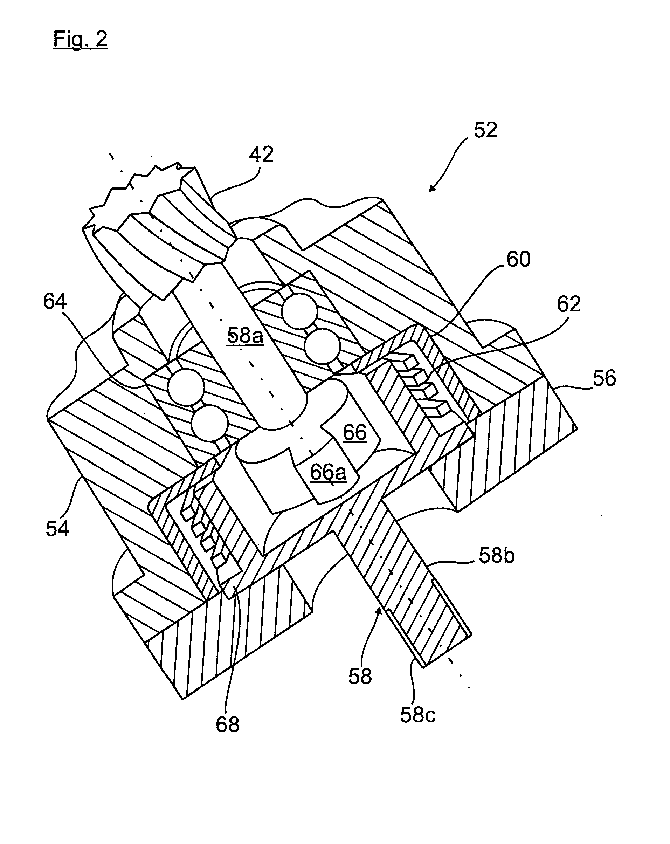

Zwischen den Elektromotor 38 und dem Antriebszahnrad 42 ist eine Schlingfederbremse 52 eingeschaltet (in Fig. 1 nur angedeutet), die in den weiteren Fig. 2 bis 5 in der konstruktiven Ausführung dargestellt ist. Die Schlingfederbremse 52 ermöglicht einen unbehinderten Antrieb der Kugelgewindemutter 20 in beide Drehrichtungen, stützt aber ein Rücktriebsmoment ab, das sich aufgrund von Seitenkräften an dem gelenkten Hinterrad ergibt.

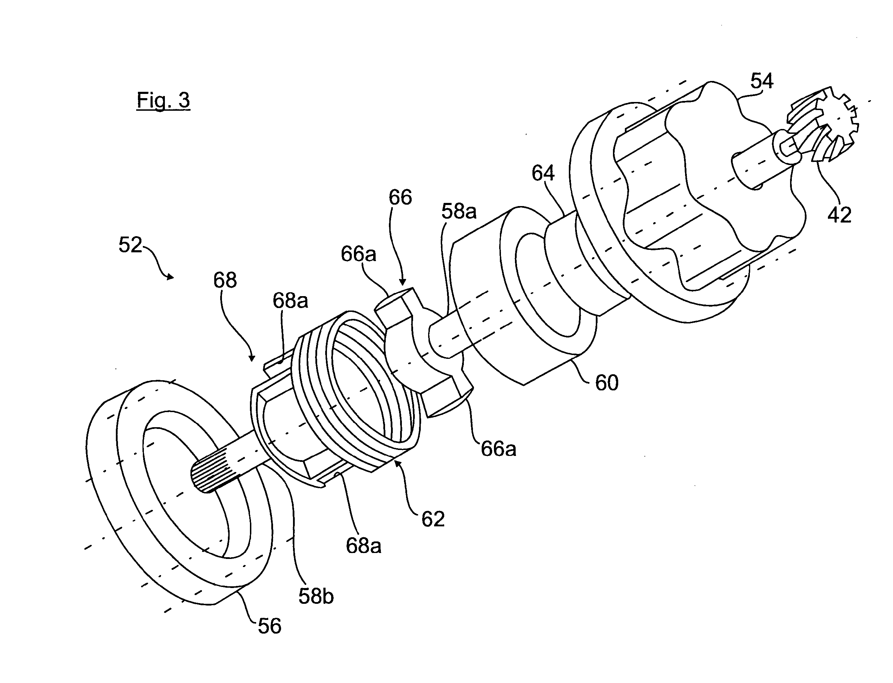

Die Fig. 2 und 3 zeigen zunächst die Einzelteile der Schlingfederbremse 52, die aus einem äußeren Gehäuse 54 mit einer die Gehäuseöffnung einerseits abschließenden Adapterplatte 56, einer in zwei Abschnitte 58a, 58b unterteilten Antriebswelle 58, einer in das Gehäuse 54 fest eingesetzten, tassenförmigen Hülse 60 und einer in der Hülse 60 angeordneten, sich aus mehreren Windungen zusammensetzenden Schlingfeder 62 aus Federstahl zusammensetzt. Die Antriebswelle 58 erstreckt sich durch das Gehäuse 54 mit Adapterplatte 56 und trägt einerseits das Antriebszahnrad 42 des Stirnzahnradtriebes 23 und andererseits eine kerbverzahnte Steckverbindung 58c, mittels der die Antriebswelle 58 mit der nicht dargestellten Antriebswelle des Elektromotors 38 trieblich verbindbar ist, wobei zugleich das Gehäuse 54 über die Adapterplatte 56 mit dem Gehäuse des Elektromotors 38 verschraubt ist.

Der Abschnitt 58a der Antriebswelle 58 ist über ein zweireihiges Wälzlager beziehungsweise Kugellager 64 im Gehäuse 54 drehbar gelagert und trägt daran anschließend ein Schließerteil 66, das zwei radial und diametral nach außen ragende Mitnehmer 66a aufweist.

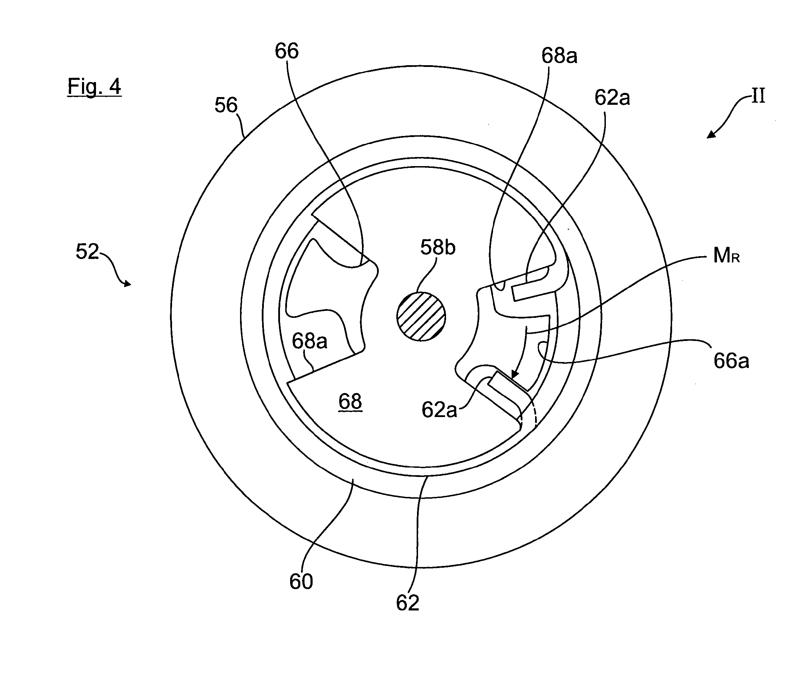

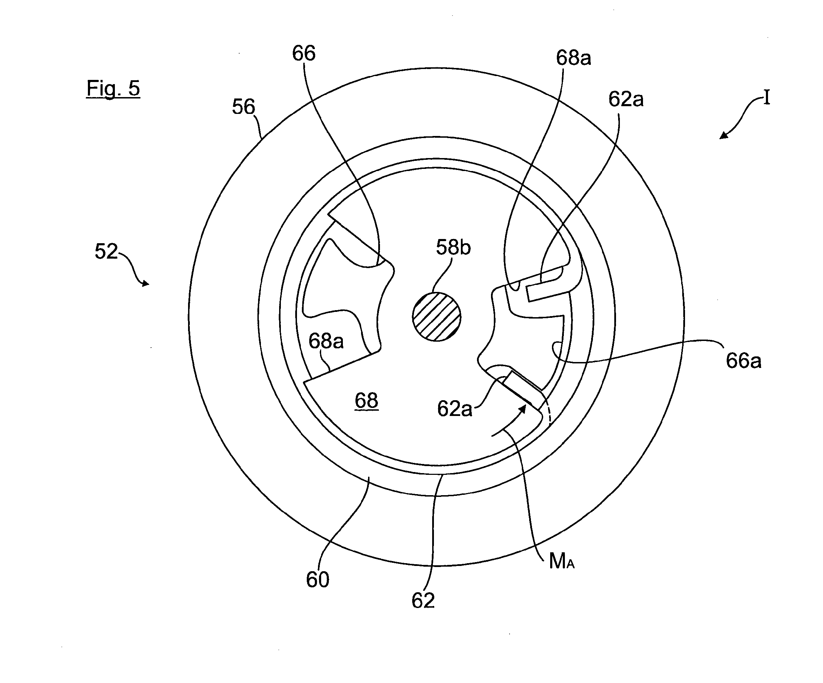

Die Mitnehmer 66a des Schließerteils 66 ragen in korrespondierende Ausnehmungen 68a eines büchsenförmigen Öffnerteiles 68 ein, das an dem zweiten Abschnitt 58b der Antriebswelle 58 ausgebildet ist. Zwischen den Mitnehmern 66a des Schließerteiles 66 und den Ausnehmungen 68a des Öffnerteiles 68 ist jeweils ein definiertes Umfangsspiel vorgesehen (vgl. Fig. 4 und 5).

Die in einer Radialebene mit dem Schließerteil 66 und dem Öffnerteil 68 innerhalb der Hülse 60 angeordnete Schlingfeder 62 weist gemäß den Fig. 4 und 5 an ihren Windungsenden zwei radial nach innen ragende Arme 62a auf, die beiderseits der Mitnehmer 66a des Schließerteils 66 in die Ausnehmungen 68a des Öffnerteils 68 einragen. In einer Mittelstellung des Schließerteils 66 und des Öffnerteils 68 bei nicht betätigter Schlingfeder 62 sitzt diese mit leichtem Reibschluss innerhalb der Hülse 60 (zum Beispiel in der Montagestellung).

Wird für eine Verstellung der Kugelgewindemutter 20 der Elektromotor 38 bestromt, so treibt dieser in der einen oder der anderen Drehrichtung die Antriebswelle 58 der doppeltwirkenden Schlingfederbremse 52 an.

Dabei wird von dem Elektromotor 38 ein Abtriebsmoment M_{A} in die Schlingfederbremse 52 eingeleitet, die in eine, in der Fig. 5 gezeigte Freigabestellung I übergeht, damit das Antriebsmoment M_{A} bis zur Kugelgewindemutter 20 übertragen wird.

Das eingeleitete Antriebsmoment M_{A} wirkt gemäß der Fig. 5 von dem Abschnitt 58b der Antriebswelle 58 auf das Öffnerteil 68, das über die Ausnehmung 68a und den Mitnehmer 66a des Schließerteils 66 den Abschnitt 58a der Antriebswelle 58 und schließlich das Antriebszahnrad 42 antreibt. Der gemäß der Fig. 5 in die Ausnehmung 68a des Öffnerteils 68 einragende Arm 62a der Schlingfeder 62 wird dabei mitgedreht und bewirkt ein Einschnüren beziehungsweise Zusammenziehen der Schlingfeder 62, so dass diese wirkungslos innerhalb der Hülse 60 mitdrehen kann. Es wird kein Reibmoment auf die ortsfeste Hülse 60 übertragen. Die gleiche Funktion der Schlingfeder 62 liegt bei der entgegengesetzten Drehrichtung vor, wobei dann der andere Arm 62a der Schlingfeder 62 entsprechend beaufschlagt wird.

Ist der Elektromotor 38 nicht aktiviert und überträgt dieser kein Antriebsmoment, so werden gemäß der Fig. 4 gegebenenfalls auftretende Reaktionsmomente M_{R} durch die Schlingfeder 62 über die Hülse 60 abgestützt. Ein solches Reaktionsmoment M_{R} ist etwa ein Rücktriebsmoment aufgrund von Seitenkräften an dem gelenkten Hinterrad, das bei nicht aktiviertem Elektromotor 38 an der Schlingfeder 62 anliegt.

Das Reaktionsmoment M_{R} (Fig. 4) wirkt über das Antriebszahnrad 42, den Abschnitt 58a der Antriebswelle 58 und das Schließerteil 66 auf die Schlingfeder 62. Die Schlingfederbremse 52 geht dadurch in ihre Sperrstellung II (Fig. 4) über, in der der Mitnehmer 66a des Schließerteils 66 einen Arm 62a der Schlingfeder 62 derart belastet wird, dass diese sich aufweitet und aufgrund des dabei entstehenden Reibmomentes festgebremst ist. Die Antriebswelle 58 mit dem Schließerteil 66 kann somit innerhalb des Gehäuses 54 nicht verdreht werden. Der gleiche Effekt tritt auch bei einem in entgegengesetzter Drehrichtung auftretenden Drehmoment auf. Es kann daher keine unzulässige Lenkbewegung auftreten.

Zur Erhöhung des übertragbaren Reibmomentes der Schlingfeder 62 innerhalb der Hülse 60 ist der Drahtquerschnitt der Wicklungen der Schlingfeder 62 quadratisch oder rechteckförmig gestaltet, so dass im Querschnitt gesehen plane Reibflächen am Innenumfang der Hülse 60 anliegen. Die Anzahl der Windungen ist je nach berechneter Belastung der Schlingfeder 62 ausgelegt und beträgt bevorzugt mehr als zwei Windungen.

Die Erfindung ist nicht auf das beschriebene Ausführungsbeispiel beschränkt. Das Lenkgetriebe 10 kann auch als Zentralsteller mit nach beiden Seiten angeschlossenen Spurstangen oder in einem steer by wire Lenksystem auch für die gelenkten Vorderräder ausgeführt sein.

Gegebenenfalls kann in einer koaxialen Anordnung des Elektromotors 38 dieser direkt die Kugelgewindemutter 20 des Kugelgewindetriebs 16 oder einer anderen, nicht selbsthemmenden Stellvorrichtung des Lenkgetriebes über die integrierte Schlingfederbremse 52 antreiben.

Die Abtriebswelle 58 bzw. deren Wellenabschnitt 58b kann auch unmittelbar mit dem Rotor des Elektromotors 38 als ein Bauteil ausgeführt sein.

## Patentansprüche

1. Vorrichtung zum Stabilisieren eines Lenkgetriebes für ein Kraftfahrzeug, welches Lenkgetriebe ein nicht selbsthemmendes Stellgetriebe (16) mit insbesondere einer auf zumindest eine Spurstange (18) wirkender, axial verschiebbarer Spindel (14) aufweist, die mittels einer Spindelmutter (20) verstellbar ist, wobei die Spindelmutter (20) über einen Elektromotor (38) angetrieben ist, dessen Abtriebswelle (58) mittel- oder unmittelbar auf die Spindelmutter (20) wirkt, **dadurch gekennzeichnet, dass** in dem Antriebsweg zwischen dem Elektromotor (38) und der Spindelmutter (20) ein Sperrelement, insbesondere Schlingfederbremse (52), geschaltet ist, das in einer Freigabestellung (I) den Antriebsweg für eine Übertragung eines Antriebsmoments (M_{A}) vom Elektromotor (38) auf die Spindelmutter (20) freischaltet, und in einer Sperrstellung (II) ein Bremsmoment erzeugt, das einem von der Spindelmutter (20) auf den Elektromotor (38) gerichteten Reaktionsmoment (M_{R}) entgegenwirkt.

2. Vorrichtung nach Anspruch 1, **dadurch gekennzeichnet, dass** das Sperrelement (52) dem von der Spindelmutter (20) kommenden Reaktionsmoment (M_{R}) unabhängig von seiner Drehrichtung entgegenwirkt, und/oder dass das Sperrelement (52) eine Übertragung des von dem Elektromotor (38) kommenden Antriebsmoments (M_{A}) unabhängig von seiner Drehrichtung zulässt.

3. Vorrichtung nach einem der Ansprüche 1 oder 2, **dadurch gekennzeichnet, dass** das Sperrelement (52) bei einer Drehbetätigung des Elektromotors (38) selbsttätig in seine Freigabestellung (I) übergeht.

4. Vorrichtung nach einem der vorhergehenden Ansprüche, **dadurch gekennzeichnet, dass** das Sperrelement (52) bei Aufbau eines von der Kugelgewindemutter (20) in Richtung Elektromotor (38) wirkenden Reaktionsmoments (M_{R}) in die Sperrstellung (II) übergeht, und/oder dass das vom Sperrelement (52) erzeugte Bremsmoment vorzugsweise größer als das von der Kugelgewindemutter (20) kommende Reaktionsmoment (M_{R}) ist.

5. Vorrichtung nach einem der vorhergehenden Ansprüche, **dadurch gekennzeichnet, dass** die Schlingfederbremse (52) in die Antriebswelle (58) der Drehantriebseinheit geschaltet ist, und dass insbesondere die Antriebswelle (58) im Bereich der Schlingfederbremse (52) in zwei Abschnitte (58a, 58b) unterteilt ist, die jeweils ein Öffnerteil (68) und ein Schließerteil (66) tragen, die unter Belassung eines Umfangsspieles in beiden Drehrichtungen formschlüssig ineinander greifen, wobei eine Schlingfeder (62) mit von ihren Windungen radial abragenden Armen (62a) jeweils zwischen das Öffnerteil (68) und das Schließerteil (66) einragt.

6. Vorrichtung nach Anspruch 5, **dadurch gekennzeichnet, dass** die Schlingfeder (62) in einer deren Außenumfang umschließenden, gehäusefesten Hülse (60) angeordnet ist, in die das Schließerteil (66) und das Öffnerteil (68) einragen und mit deren radial nach innen ragenden Armen (62a) zusammenwirken, und/oder dass das Schließerteil (66) auf dem einen Abschnitt (58a) der Antriebswelle (58) zwei radial nach außen abragende Mitnehmer (66a) aufweist, die in Ausnehmungen (68a) des an dem anderen Abschnitt (58b) der Antriebswelle (58) befestigten, hülsenförmigen Öffnerteils (68) einragen.

7. Vorrichtung nach Anspruch 5 oder 6, **dadurch gekennzeichnet, dass** die Schlingfeder (62) in einer Mittelstellung mit Vorspannung reibschlüssig in der Hülse (60) angeordnet ist.

8. Vorrichtung nach einem der Ansprüche 5 bis 8, **dadurch gekennzeichnet, dass** der das Antriebszahnrad (42) und das Schließerteil (66) tragende Abschnitt (58a) der Antriebswelle (58) und der das Öffnerteil (68) tragende Abschnitt (58b) der Antriebswelle (58) innerhalb des Gehäuses (54) und einer Adapterplatte (56) angeordnet sind, die mit dem Gehäuse des Elektromotors (38) und über eine Steckverbindung (58c) mit der Antriebswelle des Elektromotors (38) verbindbar sind.

9. Vorrichtung nach einem der vorhergehenden Ansprüche, **dadurch gekennzeichnet, dass** der Elektromotor (38) achsparallel zur Spindel (14) des Stellgetriebes (16) angeordnet ist, und insbesondere auf seiner zweiteiligen Abtriebswelle (58a, 58b) das Antriebszahnrad (42) trägt, das Teil eines auf die Spindelmutter (20) wirkenden Zahntriebes ist.

10. Vorrichtung nach einem der vorhergehenden Ansprüche, **dadurch gekennzeichnet, dass** das Stellgetriebe durch einen Kugelgewindetrieb (16) gebildet ist, dessen Kugelgewindemutter (20) im Lenkgehäuse (12) drehbar, jedoch axial unverschiebbar geführt ist und über den Zahntrieb (23) angetrieben ist und dessen Gewindespindel (14) unverdrehbar, jedoch axial verschiebbar im Lenkgehäuse (12) gelagert und mit zumindest einer Spurstange (18) trieblich verbunden ist.

11. Vorrichtung nach einem der vorhergehenden Ansprüche, **dadurch gekennzeichnet, dass** das Lenkgetriebe ein einseitig oder zentral wirkender Lenkungssteller (10) für die gelenkten Hinterräder von Kraftfahrzeugen ist.
